# EUROPEAN PATENT APPLICATION

(11) **EP 4 778 644 A1**
(43) Date of publication of application: **22.07.2026**
(21) Application number: 25211404.6
(22) Date of filing: 27.10.2025
(51) Int. Cl.: B22C 9/02, B22C 9/10, B22C 9/12, B22C 9/18, B22C 9/24

(54) **SYSTEMS AND METHODS OF LIMITING MOVEMENT BETWEEN A SHELL STRUCTURE AND A CORE STRUCTURE OF AN ADDITIVELY MANUFACTURED CERAMIC MOLD**

(30) Priority: 16.01.2025 US 202519024923
(71) Applicant: GE Vernova Technology GmbH, 5400 Baden (CH)
(72) Inventor: DAS, Suman, Atlanta, 30318 (US); DEVKATE, Gaurav Nanasaheb, Atlanta, 30318 (US); SPAETH, Joshua Curt, Atlanta, 30318 (US); THWAITE, Thomas Charles, Atlanta, 30318 (US); HA, Anthony, Atlanta, 30318 (US); COSKUNPINAR, Caglar, Atlanta, 30318 (US); HARDWICKE, Canan U., Greenville, 29615 (US); SCHAEFFER, Ethan Conrad, Greenville, 29615 (US); HANSLITS, Christopher Raymond, Greenville, 29615 (US)
(74) Representative: Openshaw & Co.

(57) **Abstract**

A method (1300) for fabricating a ceramic mold (100) is provided. The method (1300) includes additively manufacturing the ceramic mold (100) with a liquid ceramic photopolymer by using an additive manufacturing system (400). The ceramic mold (100) includes a core structure (104) and a shell structure (102). A cavity (110) is defined between the core structure (104) and the shell structure (102) that is adapted to define a shape of a cast component (45). The shell structure (102) defines a plurality of shell apertures (106). The method (1300) further includes inserting each pin (108) of a plurality of pins (108) through a first shell aperture (106) of the plurality of shell apertures (106), across a portion of the cavity (110), and into one of a second shell aperture (106) of the plurality of shell apertures (106) or contact with the core structure (104).

## Description

### FEDERALLY SPONSORED RESEARCH

This invention was made with government support under contract number DE-AR0001590 awarded by the Department of Energy. The U.S. government may have certain rights in the invention.

### FIELD

The present disclosure relates generally to systems and methods of limiting movement between a shell structure and a core structure of an additively manufactured ceramic mold during firing of the additively manufactured ceramic mold.

### BACKGROUND

Turbine buckets or blades, such as those used with gas turbine engines, aircraft engines, and/or steam turbines, for example, may be formed using a mold and casting process. Conventionally, molds are formed of ceramic materials and include an outer ceramic shell having an internal surface defining a cavity and one or more ceramic cores positioned within the cavity that form interior cooling passageways within the cast bucket. Ceramic molds may be formed using a lost-wax casting process, wherein cores are first formed by ceramic injection molding into a machined core die. Molded cores may then be fired to high temperatures in order to strengthen the core, and then subsequently, the fired core is placed in another machined wax die for forming the shell surrounding the core.

More recently, manufacturing processes may form the core and shell simultaneously using an additive manufacturing process (i.e., a 3-D printing process). Subsequently, the core and the shell may be fired at the same time. During firing, the additively manufactured ceramic mold may be placed in an oven, where the mold is heated significantly to sinter and fuse the ceramic particles, forming a dense, durable structure. However, the high temperatures experienced by the additively manufactured mold during firing may cause movement or deflection of the core relative to the shell. This can result in distortion of the cooling passageways, may cause narrowing between an inner wall of the shell and the core, and/or in some cases, may cause core kissout, a condition when the core contacts an inner surface of the shell.

Accordingly, a system and method for limiting movement of the shell and core relative to one another during the firing of an additively manufactured ceramic mold is desired and would be advantageous in the art.

### BRIEF DESCRIPTION

Aspects and advantages of the methods and ceramic molds in accordance with the present disclosure will be set forth in part in the following description, or may be obvious from the description, or may be learned through practice of the technology.

In accordance with one embodiment, a method for fabricating a ceramic mold is provided. The method includes additively manufacturing the ceramic mold with a liquid ceramic photopolymer by using an additive manufacturing system. The ceramic mold includes a core structure and a shell structure each formed from the liquid ceramic photopolymer. A cavity is defined between the core structure and the shell structure. The cavity is adapted to define the shape of a cast component upon casting and removal of the ceramic mold. The shell structure defines a plurality of shell apertures. The method further includes inserting each pin of a plurality of pins through a first shell aperture of the plurality of shell apertures, across a portion of the cavity, and into one of a second shell aperture of the plurality of shell aperture or contact with the core structure.

In accordance with another embodiment, a ceramic mold is provided. The ceramic mold includes a shell structure defining a plurality of shell apertures each sized to receive a pin. The ceramic mold further includes a core structure disposed within the shell structure. A cavity is defined between the core structure and the shell structure. The cavity is adapted to define the shape of a cast component upon casting and removal of the ceramic mold.

These and other features, aspects and advantages of the present methods and ceramic molds will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present methods and ceramic molds, including the best mode of making and using the present systems and methods, directed to one of ordinary skill in the art, is set forth in the specification, which makes reference to the appended figures, in which:
FIG. 1 is a schematic illustration of a turbomachine in accordance with embodiments of the present disclosure;
FIG. 2 illustrates a perspective, partial cut-away, view of a cast component (such as a turbine component) in accordance with embodiments of the present disclosure;
FIG. 3 illustrates a ceramic mold for generating a cast component (such as the cast component shown in FIG. 2) is illustrated in accordance with embodiments of the present disclosure;
FIG. 4 illustrates a perspective view of an additive manufacturing system, such as a device for carrying out successive phases of the method sequence for additive manufacturing of ceramic molds such as direct light processing (DLP) in accordance with various aspects of the present disclosure;
FIG. 5 illustrates a cross-sectional view of a ceramic mold having a plurality of pins inserted therein in accordance with embodiments of the present disclosure;
FIG. 6 illustrates a cross-sectional view of a ceramic mold having a plurality of pins inserted therein in accordance with embodiments of the present disclosure;
FIG. 7 illustrates a cross-sectional view of a portion of a ceramic mold in accordance with embodiments of the present disclosure;
FIG. 8 illustrates a cross-sectional view of a ceramic mold having a plurality of plugs inserted therein in accordance with aspects of the present disclosure; and
FIG. 9 a flow diagram of a method for fabricating a ceramic mold is illustrated in accordance with embodiments of the present disclosure.

### DETAILED DESCRIPTION

Reference now will be made in detail to embodiments of the present methods and ceramic molds, one or more examples of which are illustrated in the drawings. Each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components.

The term "fluid" may be a gas or a liquid. The term "fluid communication" means that a fluid is capable of making the connection between the areas specified.

As used herein, the terms "upstream" (or "forward") and "downstream" (or "aft") refer to the relative direction with respect to fluid flow in a fluid pathway. For example, "upstream" refers to the direction from which the fluid flows, and "downstream" refers to the direction to which the fluid flows. However, the terms "upstream" and "downstream" as used herein may also refer to a flow of electricity. The term "radially" refers to the relative direction that is substantially perpendicular to an axial centerline of a particular component, the term "axially" refers to the relative direction that is substantially parallel and/or coaxially aligned to an axial centerline of a particular component and the term "circumferentially" refers to the relative direction that extends around the axial centerline of a particular component.

Terms of approximation, such as "about," "approximately," "generally," and "substantially," are not to be limited to the precise value specified. In at least some instances, the approximating language may correspond to the precision of an instrument for measuring the value, or the precision of the methods or machines for constructing or manufacturing the components and/or systems. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values. When used in the context of an angle or direction, such terms include within ten degrees greater or less than the stated angle or direction. For example, "generally vertical" includes directions within ten degrees of vertical in any direction, e.g., clockwise or counter-clockwise.

The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

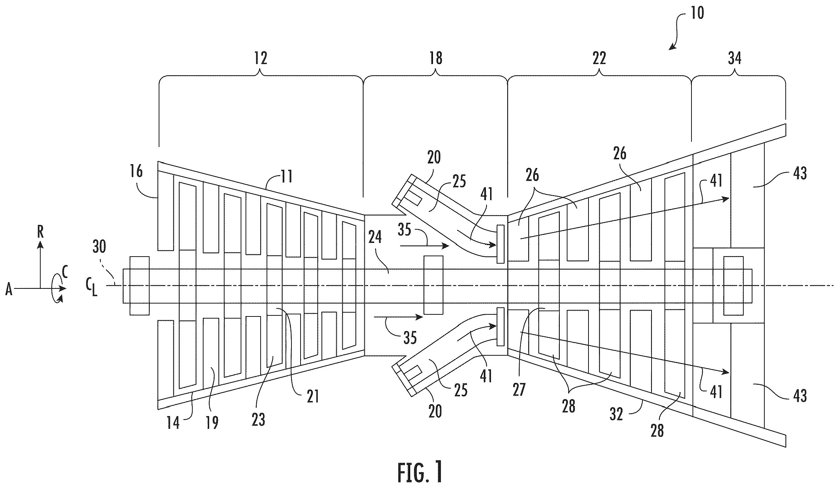

Referring now to the drawings, FIG. 1 illustrates a schematic diagram of one embodiment of a turbomachine, which in the illustrated embodiment is a gas turbine 10. Although an industrial or land-based gas turbine engine is shown and described herein, the present disclosure is not limited to an industrial or land-based gas turbine engine, unless otherwise specified in the claims. For example, the invention as described herein may be used in any type of turbomachine including, but not limited to, a steam turbine, an aircraft gas turbine, or a marine gas turbine.

As shown in FIG. 1, the gas turbine engine 10 generally includes a compressor section 12. The compressor section 12 includes a compressor 14. The compressor section 12 includes an inlet 16 that is disposed at an upstream end of the gas turbine 10. The gas turbine 10 further includes a combustion section 18 having one or more combustors 20 disposed downstream from the compressor section 12. The gas turbine 10 further includes a turbine section 22 (i.e., an expansion turbine) that is downstream from the combustion section 18. A shaft 24 extends generally axially through the gas turbine engine 10 and couples the compressor section 12 and the turbine section 22.

The compressor section 12 may generally include a plurality of rotor disks 21 and a plurality of rotor blades 23 extending radially outwardly from and connected to each rotor disk 21. Each rotor disk 21 in turn may be coupled to or form a forward portion of the shaft 24 that extends through the compressor section 12. The rotor blades 23 of the compressor section 12 may include turbomachine airfoils that define an airfoil shape (e.g., having a leading edge, a trailing edge, and side walls extending between the leading edge and the trailing edge). Additionally, the compressor section 12 includes stator vanes 19 disposed between the rotor blades 23. The stator vanes 19 may extend from and couple to a compressor casing 11.

The turbine section 22 may generally include a plurality of rotor disks 27 and a plurality of rotor blades 28 extending radially outwardly from and being interconnected to each rotor disk 27. Each rotor disk 27 in turn may be coupled to or form an aft portion of the shaft 24 that extends through the turbine section 22. The turbine section 22 further includes an outer casing 32 that circumferentially surrounds the aft portion of the shaft 24 and the rotor blades 28. The turbine section 22 may include stator vanes or stationary nozzles 26 extending radially inward from the outer casing 32. The rotor blades 28 and stator vanes 26 may be arranged in alternating fashion in stages along an axial centerline 30 of gas turbine 10. Both the rotor blades 28 and the stator vanes 26 may include turbomachine airfoils that define an airfoil shape (e.g., having a leading edge, a trailing edge, and side walls extending between the leading edge and the trailing edge).

In operation, ambient air or other working fluid is drawn into the inlet 16 of the compressor 14 and is progressively compressed to provide a compressed air 35 to the combustion section 18. The compressed air 35 flows into the combustion section 18 and is mixed with fuel to form a combustible mixture. The combustible mixture is burned within a combustion chamber 25 of the combustor 20, thereby generating combustion gases 41 that flow from the combustion chamber 25 into the turbine section 22. Energy (kinetic and/or thermal) is transferred from the combustion gases 41 to the rotor blades 28, causing the shaft 24 to rotate and produce mechanical work. The spent combustion gases 41 (also called "exhaust gases") exit the turbine section 22 and flow through the exhaust diffuser 34 across a plurality of struts or main airfoils 43 that are disposed within the exhaust diffuser 34.

The gas turbine engine 10 may define a cylindrical coordinate system having an axial direction A extending along the axial centerline 30, a radial direction R perpendicular to the axial centerline 30, and a circumferential direction C extending around the axial centerline 30.

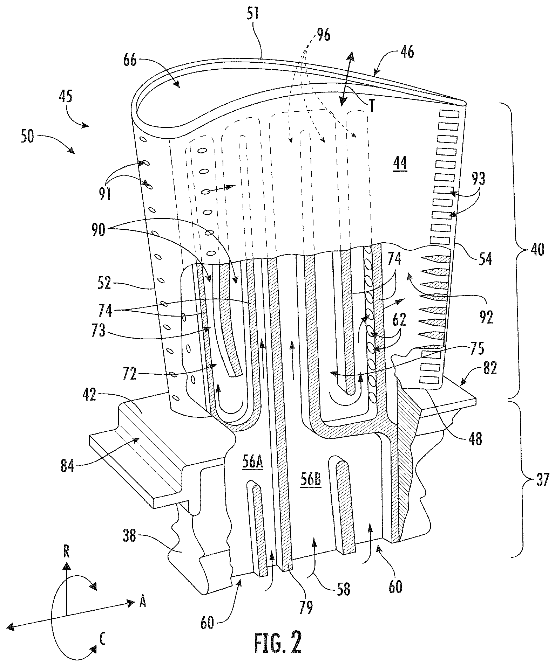

FIG. 2 provides a perspective, partial cut-away view of an exemplary cast component 45, such as turbine component (e.g., a rotor blade 50 or stator vane). The rotor blade 50 may be the rotor blade 23 disposed in the compressor section 12 or the rotor blade 28 disposed in the turbine section 22, which are described above with reference to FIG. 1. As shown in FIG. 2, the rotor blade 50 generally includes a shank 37 and an airfoil 40 that extends outwardly from the shank 37. For example, the shank 37 may include a mounting portion 38 and a platform 42, and the airfoil 40 may extend along the radial direction R from the platform 42. The platform 42 generally serves as the radially inward boundary for the gases flowing through the gas turbine engine 10 (e.g., air flowing through the compressor section 12 or hot gases 41 flowing through the hot gas path of the turbine section 22, as shown in FIG. 1). The platform 42 extends along the axial direction A from a leading face 84 to a trailing face 82. As shown in FIG. 2, the mounting portion 38 of the shank 37 may extend radially inwardly from the platform 42 and may include a root structure, such as a dovetail, configured to interconnect or secure the rotor blade 50 to a rotor disk 21, 27 (FIG. 1). In exemplary embodiments, the rotor blade 50 may be a turbine rotor blade (such as the rotor blade 28 described above with reference to FIG. 1), which may benefit from the present cooling circuit(s).

The airfoil 40 includes a pressure side wall 44 and an opposing suction side wall 46. The pressure side wall 44 and the suction side wall 46 extend substantially radially outwardly from the platform 42 in span from a root 48 of the airfoil 40, which may be defined at an intersection between the airfoil 40 and the platform 42, to a tip 51 of the airfoil 40. The pressure side wall 44 is connected to the suction side wall 46 at a leading edge 52 of the airfoil 40 and a trailing edge 54 downstream of the leading edge 52, and the airfoil 40 thus extends between the leading edge 52 and the trailing edge 54. The pressure side wall 44 generally comprises an aerodynamic, concave external surface of the airfoil 40. Similarly, the suction side wall 46 may generally define an aerodynamic, convex external surface of the airfoil 40. The tip 51 is disposed radially opposite the root 48. As such, the tip 51 may generally define the radially outermost portion of the rotor blade 50 and, thus, may be configured to be positioned adjacent to a stationary shroud or seal (not shown) of the gas turbine engine 10. The tip 51 may include a tip cavity 66 or a tip shroud (not shown).

As shown in FIG. 2, the rotor blade 50 may be at least partially hollow, e.g., the rotor blade 50 may include a cooling circuit 72 defined therein. The cooling circuit 72 may include a leading circuit 73 and a trailing circuit 75. In some embodiments, the leading circuit 73 and the trailing circuit 75 may be fluidly isolated from one another. In other embodiments, the leading circuit 73 and the trailing circuit 75 may be fluidly coupled to one another. The leading circuit 73 may be utilized for cooling the leading (or forward) portion of the rotor blade 50, and the trailing circuit 75 may be utilized for cooling the trailing (or aft) portion of the rotor blade 50. The leading circuit 73 may be disposed between the leading edge 52 and a dividing rib 79, and the trailing circuit 75 may be disposed between the dividing rib 79 and the trailing edge 54. The leading circuit 73 may include leading inlet passages 56A each extending within the shank 37 between an inlet 60 and a leading passage 90 of a plurality of leading passages 90 defined in the airfoil 40 forward of the dividing rib 79. Similarly, the trailing circuit 75 may include trailing inlet passages 56B each extending within the shank 37 between an inlet 60 a trailing passage 96 of a plurality of trailing passages 96 defined in the airfoil 40 aft of the dividing rib 79.

The leading passages 90 and the trailing passages 96 may be at least partially defined by and between a plurality of ribs 74. The ribs 74 extend partially through the cooling circuit 72 generally along the radial direction R, e.g., as illustrated in FIG. 2. The ribs 74 may extend fully through the cooling circuit 72 between the pressure side wall 44 and the suction side wall 46. For example, each rib 74 may radially terminate near one of a root turn or a tip turn. The root turn may be partially defined by a floor, which defines the radially inward most boundary of the root turn.

Coolant 58 may include a portion of the compressed air from the compressor section 12 (FIG. 1) and/or steam or any other suitable gas or other fluid for cooling the airfoil 40. The inlets 60 may be disposed along the mounting portion 38 of the rotor blade 50. The inlets 60 are in fluid communication with at least one of the leading circuit 73 via the leading inlet passage 56A or the trailing circuit 75 via the trailing inlet passage 56B.

In many embodiments, as shown, the leading passages 90 may include: a first leading passage 90 defined between the leading edge 52 and a rib 74; a second leading passage 90 defined between two ribs 74; and a third leading passage 90 may be defined between a rib 74 and the dividing rib 79 (which partitions the leading circuit 73 and the trailing circuit 75). The third leading passage 90 extend directly from the leading inlet passage 56A. A plurality of leading edge 91 outlets may be defined at the leading edge 52 and in fluid communication with the first leading passage 90.

Similarly, the trailing passages 96 may include: a first trailing passage 96 defined between a rib 74 and the dividing rib 79 (which partitions the leading circuit 73 and the trailing circuit 75); a second trailing passage 96 defined between a first pair of two ribs 74, and a third trailing passage defined between a second pair of two ribs 74. The first trailing passage 96 may extend directly from the trailing inlet passage 56B. Additionally, the trailing circuit 75 may include a trailing edge passage 92 defined between a rib 74 and the trailing edge 54, which may be fluidly coupled to the third trailing passage 96 via a plurality of holes in 62 defined the rib 74. In many embodiments, a plurality of trailing edge outlets 93 may be defined at the trailing edge 54, which may be in fluid communication with the trailing edge passage 92. In some embodiments (not shown), the rotor blade 50 may include a pin bank having a plurality of pins extending between the pressure side 44 and the suction side 46 and disposed within the trailing edge passage 92.

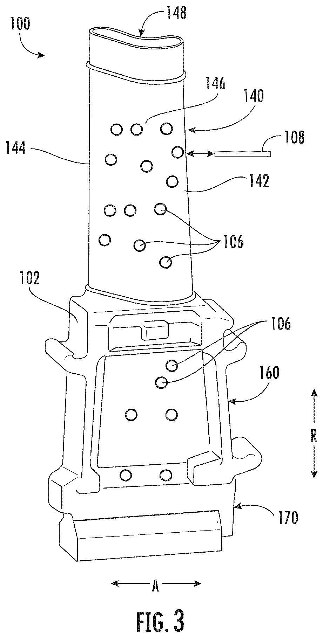

Referring now to FIG. 3, a ceramic mold 100 for generating a cast component (such as the cast component 45 described above with reference to FIG. 2) is illustrated in accordance with embodiments of the present disclosure. The ceramic mold 100 may be generated by utilizing additive manufacturing techniques. The additive manufacturing techniques may include several steps, including but not limited to: mold design via a CAD process, printing the mold via a ceramic slurry, preparing the mold via evacuation, cleaning, and firing the mold. These steps, however, may create stress concentrations and other faults in the ceramic mold 100. This is particularly true during the firing step that may place a significant amount of stress relief on the ceramic components and may lead to cracking and dimensional nonconformance. FIG. 3 illustrates ceramic mold 100 for a cast component (such as a rotor blade), which is formed from a ceramic slurry in an additive manufacturing process.

The ceramic mold 100 may include a shell structure 102 and a core structure (not illustrated in FIG. 3) disposed within the shell structure 102. The ceramic mold 100 may include an airfoil portion 140, a shank portion 160, and a base portion 170 (or pour cup region). The airfoil portion 140 may include a leading edge segment 142, a trailing edge segment 144, a pressure side segment 146 extending between the leading edge segment 142 and the trailing edge segment 144, and a suction side segment 146 disposed opposite the pressure side segment 146 and extending between the leading edge segment 142 and the trailing edge segment 144. In exemplary embodiments, as shown, the shell structure 102 of the ceramic mold 100 may defines a plurality of shell apertures 106. Each shell aperture 106 of the plurality of shell apertures 106 may be sized, shaped, and oriented to receive a respective pin 108. As discussed below, each pin 108 may be inserted into a respective shell aperture 106 after additively manufacturing the ceramic mold 100 with the shell apertures 106 but before the ceramic mold 100 is fired. Each pin 108 may extend through a shell aperture 106 in the shell structure 102 and contact the core structure of the ceramic mold 100. Once the pins 108 are inserted, and fixed on the shell structure 102, the ceramic mold 100 may be fired, and the pins 108 may advantageously prevent relative movement of the shell structure 102 and the core structure of the ceramic mold 100, thereby maintaining designed spacing between shell structure 102 and the core structure during and after the firing of ceramic mold 100.

As shown in FIG. 3, the plurality of shell apertures 106 may be defined in both the airfoil portion 140 and the shank portion 160 of the ceramic mold 100. For example, a first group of shell apertures 106 may be defined in the airfoil portion 140 of the shell structure 102 of the ceramic mold 100, and a second group of apertures 106 may be defined in the shank portion 160 of the shell structure 102 of the ceramic mold 100. In some embodiments, the first group may include more shell apertures 106 than the second group (i.e., the airfoil portion 140 may define more shell apertures 106 than the shank portion 160). In other embodiments, the first group may include less shell apertures 106 than the second group (i.e., the airfoil portion 140 may define less shell apertures 106 than the shank portion 160). The number of shell apertures 106 in the first group and the second group may depend on the size and complexity of the cast component (e.g., a rotor blade).

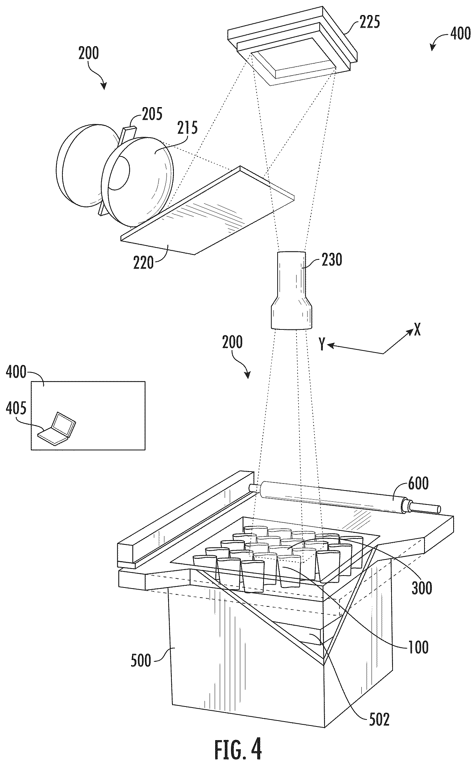

Referring now to FIG. 4, an additive manufacturing system 400, which may be utilized for generating the ceramic mold 100 discussed above with reference to FIG. 3, is illustrated in accordance with various aspects of the present disclosure. Particularly, the additive manufacturing system 400 illustrated in FIG. 4 may be a direct light processing (DLP) system. However, it should be appreciated that other similar additive manufacturing systems may be utilized for generating the ceramic mold 100, and the present invention should not be limited to any particular type of additive manufacturing system unless specifically recited in the claims. For example, in some embodiments, the system 400 may be a stereolithography (SLA) system that employs a top-down irradiation technique, which may be utilized in producing an integrated core-shell mold in accordance with the present invention.

The additive manufacturing system for fabricating a ceramic mold includes an optical imaging system 200 for providing a light source 205, a photosensitive medium 300 (such as a liquid ceramic photopolymer) that is adapted to change states, and a control system 400 for continuously moving the optical imaging system above the photosensitive medium 300. The optical imaging system 200 may use an array of spatial light modulators (SLMs) 225 to scan and/or cure a portion of the surface of the photosensitive medium 300 housed in a container 500. In an exemplary embodiment, the medium is a liquid ceramic photopolymer. As the optical imaging system 200 scans the photosensitive medium, when the light source 205 illuminates a portion of the surface of the medium, the characteristics of the medium change (i.e., the liquid ceramic photopolymer cures, thereby transitioning from a liquid or aqueous state to the solid state). Subsequently, a material build platform 502 housed within the container 500 may be lowered (e.g., in the Z direction), and a material recoating system 600-which for illustration purposes is shown as a wirewound draw-down bar-sweeps uniform thickness layers of the photosensitive medium at high speeds across the material build platform 502, without disturbing the previously built layers. Once a new layer of the photosensitive medium has been formed, focusing and alignment optics may ensure that the surface of the medium is at the focal plane of the projection lens, making fine adjustments in the Z-direction if necessary. Upon completion of this step, the process repeats the cycle of curing the next layer and delivering new photosensitive material until the entire build is completed.

Specifically, light from light sources 205, such as an ultraviolet (UV) light source in exemplary embodiments, of the optical imaging system 200 is conditioned and conveyed through transmissive optics 215 and/or off of reflective optics 220 (e.g., mirrors). The UV light sources 205 are conditioned and conveyed through the transmissive and reflective optics 215, 220 onto the array of SLMs 225.

The array of SLMs 225 may receive a real-time video stream of CAD data-slice bitmap images from a control system 400. A process control computer 405 of the control system 400 may turn the corresponding pixels in the array ON or OFF. As described, the light from the ON pixels may be reflected downwards and transmitted into the projection lens system 230. The projection lens 230 may convey highly focused images at the rate of several kilohertz (kHz) corresponding to the ON pixels onto the surface 300 of a photosensitive medium in the material build platform 502. The optical imaging system 200, including the light source 205, optics 215, SLM array 225, and projection lens 230, may be scanned along the X and Y axes at high speeds to continuously expose and cure new areas of the photosensitive material synchronously with images that are continuously refreshed on the SLM array. When the entire surface area of the resin 300 has been scanned and exposed, the build platform 502 may be moved downward along the negative Z-axis by a slice layer thickness, and a new layer of photocurable material may be swept by the material recoating system 600. The process repeats until the entire build is completed.

Other alternative methods of DLP may be used to prepare the integrated core-shell ceramic molds of the present invention.

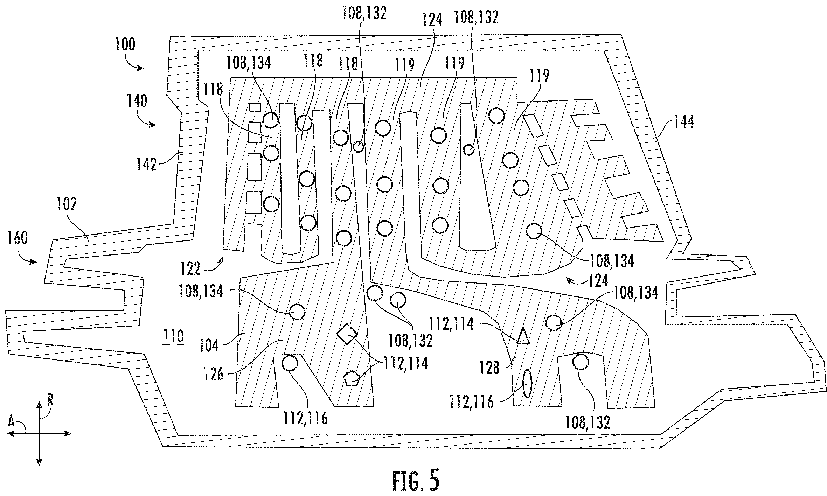

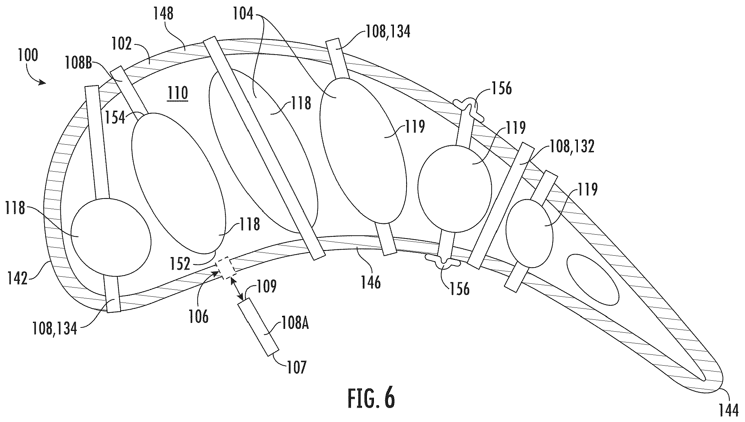

Referring now to FIGS. 5 and 6, two cross-sectional views of the ceramic mold 100, which may be fabricated using the additive manufacturing system 400 described above with reference to FIG. 4, are illustrated in accordance with embodiments of the present disclosure. As shown in FIGS. 5 and 6, the ceramic mold 100 comprises a core structure 104 and a shell structure 102 each formed from a liquid ceramic photopolymer with an additive manufacturing system. The core structure 104 may be disposed within the shell structure 102. The core structure 104 of the ceramic mold 100 may correspond to the internal cavities of the resulting cast component upon removal of the ceramic mold. For example, in embodiments where the cast component is a rotor blade (such as the rotor blade 50 shown in FIG. 2), the core structure 104 of the ceramic mold 100 may correspond with the cooling circuit 78 defined in the rotor blade 50. Similarly, the shell structure 102 of the ceramic mold 100 may correspond to the external structures of the cast component. For example, in embodiments where the cast component is a rotor blade (such as the rotor blade 50 shown in FIG. 2), the shell structure 102 of the ceramic mold 100 may correspond with the airfoil 40 and/or the shank 37. For example, the shell structure 102 may further include an airfoil portion 140 and a shank portion 160. The airfoil portion 140 may correspond with the airfoil 40 of the cast component 45 (FIG. 2), and the shank portion 140 may correspond with the shank 37 of the cast component 45 (FIG. 2).

As shown in FIGS. 5 and 6, a cavity 110 is defined between the core structure 104 and the shell structure 102. The cavity 110 is adapted to define the shape of the cast component 45 (FIG. 2) upon casting and removal of the ceramic mold 100. Additionally, in exemplary embodiments, the ceramic mold 100 may be additively manufactured with a plurality of shell apertures 106 defined in the shell structure 102 (shown in FIG. 3 and 6). In exemplary embodiments, each shell aperture 106 of the plurality of shell apertures 106 may be sized and oriented to receive a respective pin 108. As discussed below, each pin 108 may be inserted into a respective shell aperture 106 after additively manufacturing the ceramic mold 100 but before the ceramic mold 100 is fired. Each pin 108 may extend through a shell aperture 106 in the shell structure 102 and may contact the core structure 102 of the ceramic mold 100. Once the pins 108 are inserted, the ceramic mold 100 may be fired, and the pins 108 may advantageously prevent relative movement of the shell structure 102 and the core structure of the ceramic mold 100, thereby maintaining designed spacing (e.g., the cavity 110) between shell structure 102 and the core structure during and after the firing of ceramic mold 100.

Once inserted, as shown in FIG. 6, each pin of the plurality of pins 108 may extend through a respective shell aperture 106, across a portion of the cavity 110, and contact an exterior surface of the core structure 104. Each pin 108 may be an elongate structure extending from a first end 107 and a second end 109. Each pin may define a cross-sectional shape 112 (FIG. 5) that corresponds with a shape of the respective shell aperture 106 through which the pin 108 is inserted. For example, as shown in FIG. 5, the cross-sectional shape 112 of at least one pin 108 of the plurality of pins 108 may be a polygonal cross-sectional shape 114 (such as rectangular, square, triangular, hexagonal, or any other polygonal shape). In some embodiments, the cross-sectional shape 112 of at least one pin 108 of the plurality of pins 108 may be a round cross-sectional shape 116 (such as a circle, an oval, an ellipse, or another round cross-sectional shape).

Referring back to FIG. 5, the core structure 104 may include a leading portion 122 and a trailing portion 124. The leading portion 122 may correspond to the leading circuit 73 of the cast component 45 described above with reference to FIG. 2, e.g., upon casting and removal of the cast component 45 from the ceramic mold 100. Similarly, the trailing portion 124 may correspond to the trailing circuit 75 of the cast component 45 described above with reference to FIG. 2, e.g., upon casting and removal of the cast component 45 from the ceramic mold 100. The leading portion 122 may include a leading inlet portion 126 corresponding to the leading inlet passages 56A in the cast component 45 (FIG. 2). The trailing portion 124 may include a trailing inlet portion 128 corresponding to the trailing inlet passages 56B in the cast component 45 (FIG. 2). The core structure 104 may further include a tip cap portion 124 and a plurality of elongated ligaments 118, 119 extending to the tip cap portion 124. The plurality of elongated ligaments 118, 119 may correspond to cooling passages 90, 96 in the cast component 45 (FIG. 2). Particularly, the leading portion 122 may include a first plurality of elongated ligaments 118 extending to the tip cap portion 124. At least one of the first elongated ligaments 118 may extend between the leading inlet portion 128 and the tip cap portion 124. Similarly, the trailing portion 124 may include a second plurality of elongated ligaments 119 extending to the tip cap portion 124. At least one of the second elongated ligaments 119 may extend between the trailing inlet portion 128 and the tip cap portion 124.

The first plurality of elongated ligaments 118 may correspond to the leading passages 90 in the cast component 45 (FIG. 2), e.g., upon casting and removal of the cast component 45 from the ceramic mold 100. The second plurality of elongated ligaments 119 may correspond to the trailing passages 96 in the cast component 45 (FIG. 2), e.g., upon casting and removal of the cast component 45 from the ceramic mold 100. The elongated ligaments 118, 119 may be elongated (i.e., longest) along the radial direction R.

In many embodiments, at least two pins 108 of the plurality of pins 108 may contact each elongated ligament 118, 119 of the plurality of elongated ligaments118, 119. The at least two pins 108 of the plurality of pins 108 in contact with each elongated ligament 118, 119 may be generally aligned in the radial direction R (e.g., aligned within ±10% of the radial direction, or such as aligned within ±25% of the radial direction).

The plurality of pins 108 may include both shell-to-shell pins 132 and shell-to-core pins 134. The shell-to-shell pins 132 may each extend through a first shell aperture defined in the shell structure 102, through the cavity 110, and through a second shell aperture defined in the shell structure 102. The shell-to-core pins 134 may each extend through a shell aperture defined in the shell structure 102, through a portion of the cavity 110, and into contact with the core structure 104. As shown, in FIG. 5, each of the shell-to-core pins 134 may be overlayed (or overlapping) with the core structure 104. By contrast, in FIG. 5, each of the shell-to-shell pins 132 may be overlayed (or overlapping) with the cavity 110 (e.g., not intersecting the core structure 104). At least one shell-to-shell pin 132 may extend between a first ligament 118 and a second ligament 119. One or more shell-to-shell pins 132 may be disposed between (e.g., axially between) the leading inlet portion 126 and the trailing inlet portion 128. Additionally, at least one shell-to-shell pin 132 may extend between a pair of the second ligaments 119.

As shown in FIG. 6, the shell structure 102 includes the leading edge segment 142, the trailing edge segment 144, the pressure side segment 146 extending between the leading edge segment 142 and the trailing edge segment 144, and the suction side segment 148 disposed opposite the pressure side segment 146 and extending between the leading edge segment 142 and the trailing edge segment 144. In many embodiments, inserting the pins 108 into the shell apertures 106 may include inserting a first pin 108A of the plurality of pins 108 through a shell aperture 106 of the plurality of shell apertures defined in the pressure side segment 146, across a first portion of the cavity 110, and into contact with a first point 152 of the core structure 104. Additionally, inserting the pins 108 into the shell apertures 106 may include inserting a second pin 108B of the plurality of pins 108 through a shell aperture 106 of the plurality of shell apertures defined in the suction side segment 148, across a second portion of the cavity 110, and into contact with a second point 154 of the core structure 104. In exemplary embodiments, the first pin 108A and the second pin 108B may be disposed at a common radial location.

Additionally, in many embodiments, the first point 152 and the second point 154 are diametrically opposed to one another with respect to the core structure 104. For example, as shown in FIG. 6, two shell-to-core pins 134 may contact each elongated ligament 118, 119, and the two shell-to-core pins 134 may be diametrically opposed from one another. Arranging the pins 108 in this manner advantageously maintaining designed spacing between core structure 104 and the shell structure 102 during firing of the ceramic mold 100.

In many embodiments, still referring to FIG. 6, after inserting each pin 108 of the plurality of pins 108, a bonding material 156 may be applied to an exposed portion of each pin of the plurality of pins 108 and the shell structure 102 to bond the pins 108 to the shell structure 102. In some embodiments, the bonding material 156 may be a print slurry (e.g., a liquid ceramic photopolymer), which may be applied to the exposed portion of each pin of the plurality of pins 108 and the shell structure 102. Subsequently, the print slurry (e.g., the liquid ceramic photopolymer) may be cured to solidify the print slurry and secure the plurality of pins 108 to the shell structure 102. In other embodiments, the bonding material 156 may be a ceramic cement or another bonding material. The print slurry may be cured to solidify and secure the plurality of pins 108 to the shell structure, and/or the ceramic cement may be dried to solidify and secure the plurality of pins 108 to the shell structure.

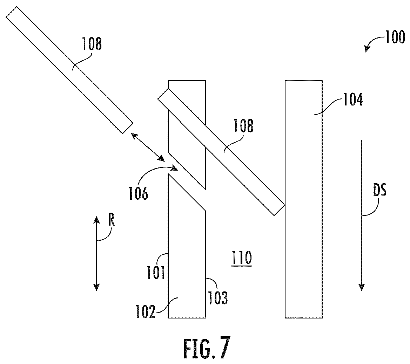

Referring now to FIG. 7, a cross-sectional view of a portion of the ceramic mold 100 is illustrated in accordance with embodiments of the present disclosure. As shown, the shell structure 102 includes an inner surface 103 and an outer surface 101. In exemplary embodiments, at least one pin of the plurality of pins 108 may form an oblique angle (e.g., not parallel or perpendicular) relative to one of the inner surface 103 or the outer surface 101. Additionally, the at least one pin of the plurality of pins 108 may form an oblique angle relative to the radial direction R. Further, during casting of the cast component 45, after liquid metal is poured into the ceramic mold 100, the liquid metal may directionally solidify along a directional solidification direction DS. At least one pin of the plurality of pins 108 may form an oblique angle (e.g., not parallel or perpendicular) relative to the directional solidification direction DS, which advantageously reduces defects in the cast component 45. This is particularly advantageous when metal pins are left in the ceramic mold during casting.

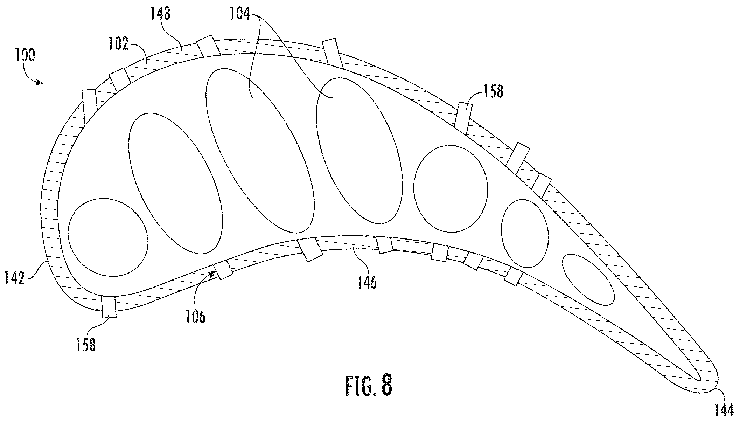

Referring now to FIG. 8, in some embodiments, after the ceramic mold 100 is fired with the pins 108 in place (FIG. 6), the pins may be removed and plugs 158 may be inserted into the shell apertures 106. The plugs 158 may be a print slurry (e.g., a liquid ceramic photopolymer), which may be applied to each shell aperture 106. Subsequently, the print slurry (e.g., the liquid ceramic photopolymer) may be cured to solidify the print slurry and form the plug 158. In other embodiments, the plugs 158 may be a mold repair cement or another bonding material. In yet still further embodiments, the plugs 158 may be printed or injection molded rivets. The internal surface of the plugs 158 may be flush with the internal surface of the ceramic mold 100, such that the plugs 158 do not impact the shape of the resulting cast component.

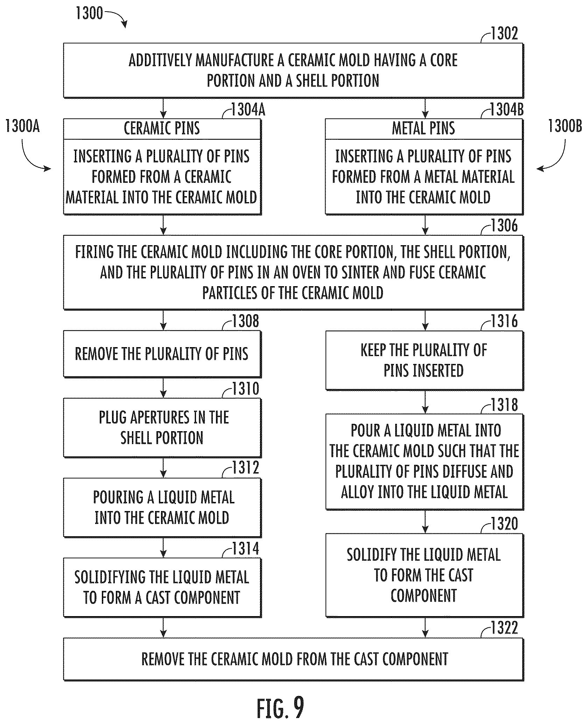

Referring now to FIG. 9, a flow diagram of a method 1300 for fabricating a ceramic mold is illustrated in accordance with embodiments of the present subject matter. The method 1300 may be performed using an additive manufacturing system, such as the additive manufacturing system 400 described herein or another suitable system. In general, the method 1300 will be described herein with reference to the additive manufacturing system 400, the ceramic mold 100, and the cast component 45 described above with reference to FIGS. 1-8. However, it will be appreciated by those of ordinary skill in the art that the disclosed method 1300 may generally be utilized with any other suitable system configuration. In addition, although FIG. 9 depicts steps performed in a particular order for purposes of illustration and discussion, the methods discussed herein are not limited to any particular order or arrangement unless otherwise specified in the claims. One skilled in the art, using the disclosures provided herein, will appreciate that various steps of the methods disclosed herein can be omitted, rearranged, combined, and/or adapted in various ways without deviating from the scope of the present disclosure.

The method 1300 may include a first process or path 1300A for when ceramic pins are utilized in conjunction with the method 1300 and a second path or process 1300B for when metal pins are utilized in conjunction with the method 1300. As shown, the method 1300 may include, at (1302) additively manufacturing a ceramic mold having a core portion and a shell portion. Specifically, the method 1300 may include additively manufacturing the ceramic mold with a liquid ceramic photopolymer by using an additive manufacturing system. In such implementations, the ceramic mold may include a core structure and a shell structure each formed from the liquid ceramic photopolymer. A cavity may be defined between the core structure and the shell structure. The cavity may be adapted to define the shape of a cast component upon casting and removal of the ceramic mold. Additionally, the ceramic mold may be additively manufactured such that the shell structure defines a plurality of shell apertures.

Additive manufacturing the ceramic mold at (1302) may involve a repetition of steps of (a) contacting a cured portion of a workpiece with a liquid ceramic photopolymer; (b) irradiating a portion of the liquid ceramic photopolymer adjacent to the cured portion; and (c) removing the workpiece from the uncured liquid ceramic photopolymer. The steps (a)- (c) are repeated until the ceramic mold shown in FIG. 3 is formed.

The method 1300 may further include at (e.g., after additively manufacturing the ceramic mold) inserting each pin of a plurality of pins through a first shell aperture of the plurality of shell apertures, across a portion of the cavity, and into one of a second shell aperture of the plurality of shell aperture or contact with the core structure. The plurality of pins may be formed from either a ceramic material (such as silica, alumina, zirconia, or carbides) or a metal material (such as platinum or a platinum or other non-oxidizing precious metal or a coated nickel or cobalt based alloy). In implementations utilizing ceramic pins, the method 1300 may include, at (1304A) inserting a plurality of pins formed from a ceramic material (e.g., the same ceramic material as the ceramic mold, or a different ceramic material in some embodiments) into the ceramic mold (e.g., through the shell apertures). In implementations utilizing metal pins, the method 1300 may include, at (1304B) inserting a plurality of pins formed from a metal material into the ceramic mold (e.g., through the shell apertures).

The method 1300 may further include, at (1306), firing the ceramic mold including the core portion, the shell portion, and the plurality of pins in an oven to sinter and fuse ceramic particles of the ceramic mold. Firing the ceramic mold may include a controlled heating (e.g., within an oven or kiln) that strengthens the ceramic mold, ensuring it can withstand high temperatures and pressures used during metal casting. Prior to firing, the ceramic mold may be dried to remove residual moisture. Firing may include a low temperature firing period in which the ceramic mold is gradually heated to drive off remaining moisture and any binders and additives in the mold material. Subsequently, firing may include a high temperature firing period during which the ceramic particles sinter and/or fuse, thereby providing a dense, durable mold. Subsequently, the ceramic mold may undergo a controlled cooling process.

In implementations of the method 1300 in which ceramic pins are utilized, the method 1300 may include, at (1308), removing the plurality of pins from the ceramic mold. Specifically, when the plurality of pins are formed from a ceramic material, after firing the ceramic mold, the method may include removing the pins. Subsequently, the method 1300 may include, at (1310), plugging the shell apertures in the shell portion. That is, the method 1300 may include inserting plugs into each shell aperture of the plurality of shell apertures. That is, after the ceramic mold is fired with the pins in place, the pins may be removed and plugs may be inserted into the shell apertures. The plugs may be a print slurry (e.g., a liquid ceramic photopolymer), which may be applied to each shell aperture. Subsequently, the print slurry (e.g., the liquid ceramic photopolymer) may be cured to solidify the print slurry and form the plug. In other embodiments, the plugs may be a mold repair cement or another bonding material, or a combination of repair cement and print slurry.

Subsequently, when utilizing ceramic pins, after plugging the shell apertures, the method 1300 may include at (1312) pouring liquid metal into the ceramic mold; and the method 1300 includes at (1314) solidifying the liquid metal to form the cast component. That is, after the mold is formed, and the pins are removed, liquid metal may then be poured into the casting mold and solidified to form the cast component. The ceramic mold may be filled with a metal, such as a nickel, aluminum, cobalt, or iron based alloy, e.g.., INCONEL^{®}.

In implementations of the method 1300 in which metal pins are utilized, the method 1300 may include, at (1316), keeping the plurality of pins inserted in the ceramic mold after firing. Subsequently, when utilizing metal pins, the method 1300 may include at (1318) pouring liquid metal into the ceramic mold such that the plurality of pins diffuse and/or alloy into the liquid metal. For example, the liquid metal may heat and liquify the metal pins, such that the pins mix with the liquid metal. After pouring at (1318), the method 1300 may include at (1320) solidifying the liquid metal to form a cast component.

Lastly, the method 1300 may include, at (1322), removing the ceramic mold from the cast component. The ceramic mold is then removed from the cast component using, for example, combination of mechanical removal of the outer shell and leaching of the inner ceramic core. That is, after the ceramic mold is fired, liquid metal may then be poured into the casting mold and solidified to form the cast component. The ceramic mold is then removed from the cast component using, for example, combination of mechanical removal of the shell structure and leaching of the core structure. Upon leaching of the ceramic core-shell, the resulting cast object is a turbine blade or stator vane.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Further aspects of the invention are provided by the subject matter of the following clauses:
A method for fabricating a ceramic mold, comprising: additively manufacturing the ceramic mold with a liquid ceramic photopolymer by using an additive manufacturing system, wherein the ceramic mold comprises a core structure and a shell structure each formed from the liquid ceramic photopolymer, wherein a cavity is defined between the core structure and the shell structure, the cavity adapted to define a shape of a cast component upon casting and removal of the ceramic mold, wherein the shell structure defines a plurality of shell apertures; and inserting each pin of a plurality of pins through a first shell aperture of the plurality of shell apertures, across a portion of the cavity, and into one of a second shell aperture of the plurality of shell aperture or contact with the core structure.

The method as in any preceding clause, wherein after inserting each pin of the plurality of pins, the method comprises: bonding the plurality of pins to the shell structure.

The method as in any preceding clause, bonding the plurality of pins to the shell structure comprises: applying a print slurry or a ceramic cement to an exposed portion of each pin of the plurality of pins and the shell structure; and curing the print slurry or drying the ceramic cement to secure the plurality of pins to the shell structure.

The method as in any preceding clause, wherein the cast component comprises a turbine component.

The method as in any preceding clause, wherein the core structure includes a plurality of elongated ligaments corresponding to cooling channels in the cast component, and wherein at least two pins of the plurality of pins contact each elongated ligament of the plurality of elongated ligaments.

The method as in any preceding clause, wherein the shell structure includes a pressure side segment and a suction side segment opposite the pressure side segment, wherein the method comprises: inserting a first pin of the plurality of pins through a shell aperture of the plurality of shell apertures defined in the pressure side segment, across a first portion of the cavity, and into contact with a first point of the core structure; and inserting a second pin of the plurality of pins through a shell aperture of the plurality of shell apertures defined in the suction side segment, across a second portion of the cavity, and into contact with a second point of the core structure.

The method as in any preceding clause, wherein the first pin and the second pin are disposed at a common radial location.

The method as in any preceding clause, wherein the first point and the second point are diametrically opposed to one another with respect to the core structure.

The method as in any preceding clause, wherein the shell structure includes an inner surface and an outer surface, and wherein at least one pin of the plurality of pins forms an oblique angle relative to one of the inner surface or the outer surface.

The method as in any preceding clause, wherein the method comprises, after the inserting step, firing the ceramic mold including the core structure, the shell structure, and the plurality of pins in an oven to sinter and fuse ceramic particles of the ceramic mold.

The method as in any preceding clause, wherein the plurality of pins are formed from a ceramic material, wherein after firing the ceramic mold, the method comprises: removing the plurality of pins from the ceramic mold.

The method as in any preceding clause, wherein after removing the plurality of pins, the method comprises: inserting plugs into each shell aperture of the plurality of shell apertures.

The method as in any preceding clause, wherein after inserting plugs into each shell aperture of the plurality of shell apertures, the method comprises: pouring a liquid metal into the ceramic mold; and solidifying the liquid metal to form the cast component.

The method as in any preceding clause, wherein the plurality of pins is formed from a metal material, wherein after firing the ceramic mold, the method comprises: pouring a liquid metal into the ceramic mold such that the plurality of pins diffuse and alloy into the liquid metal; and solidifying the liquid metal to form the cast component.

The method as in any preceding clause, further comprising removing the mold from the cast component.

The method as in any preceding clause, wherein removing the ceramic mold from the cast component comprises a combination of mechanical force and chemical leaching.

A ceramic mold comprising: a shell structure defining a plurality of shell apertures each sized, shaped, and oriented to receive a pin; and a core structure disposed within the shell structure, wherein a cavity is defined between the core structure and the shell structure, the cavity adapted to define a shape of a cast component upon casting and removal of the ceramic mold.

The ceramic mold as in any preceding clause, further comprising a plurality of pins, wherein each pin of the plurality of pins extends through a first shell aperture of the plurality of shell apertures, across a portion of the cavity, and into one of a second shell aperture of the plurality of shell aperture or contact with the core structure.

The ceramic mold as in any preceding clause, wherein the cast component is a turbine component.

## Claims

1. A method for fabricating a ceramic mold (100), comprising:
additively manufacturing the ceramic mold (100) with a liquid ceramic photopolymer by using an additive manufacturing system, wherein the ceramic mold (100) comprises a core structure (104) and a shell structure (102) each formed from the liquid ceramic photopolymer, wherein a cavity (110) is defined between the core structure (104) and the shell structure (102), the cavity (110) adapted to define a shape of a cast component upon casting and removal of the ceramic mold, wherein the shell structure (102) defines a plurality of shell apertures (106); and
inserting each pin (108) of a plurality of pins (108) through a first shell aperture of the plurality of shell apertures, across a portion of the cavity (110), and into one of a second shell aperture of the plurality of shell aperture or contact with the core structure (104).

2. The method as in claim 1, wherein after inserting each pin (108) of the plurality of pins (108), the method comprises:
bonding the plurality of pins (108) to the shell structure (102);
optionally wherein bonding the plurality of pins (108) to the shell structure (102) comprises:
applying a print slurry or a ceramic cement to an exposed portion of each pin (108) of the plurality of pins (108) and the shell structure (102); and
curing the print slurry or drying the ceramic cement to secure the plurality of pins (108) to the shell structure (102).

3. The method as in any preceding claim, wherein the cast component comprises a turbine component.

4. The method as in any preceding claim, wherein the core structure (104) includes a plurality of elongated ligaments (118) corresponding to cooling channels in the cast component, and wherein at least two pins (108) of the plurality of pins (108) contact each elongated ligament (118) of the plurality of elongated ligaments (118).

5. The method as in any preceding claim, wherein the shell structure (102) includes a pressure side segment (146) and a suction side segment (146) opposite the pressure side segment (146), wherein the method comprises:
inserting a first pin (108) of the plurality of pins (108) through a shell aperture (106) of the plurality of shell apertures (106) defined in the pressure side segment (146), across a first portion of the cavity (110), and into contact with a first point of the core structure (104); and
inserting a second pin (108) of the plurality of pins (108) through a shell aperture (106) of the plurality of shell apertures (106) defined in the suction side segment (146), across a second portion of the cavity (110), and into contact with a second point of the core structure (104).

6. The method as in claim 5, wherein the first pin (108A) and the second pin (108B) are disposed at a common radial location, or wherein the first point and the second point are diametrically opposed to one another with respect to the core structure (104).

7. The method as in claim 1, wherein the shell structure (102) includes an inner surface (103) and an outer surface (101), and wherein at least one pin (108) of the plurality of pins (108) forms an oblique angle relative to one of the inner surface (103) or the outer surface (101).

8. The method as in any preceding claim, wherein the method comprises, after the inserting step, firing the ceramic mold (100) including the core structure (104), the shell structure (102), and the plurality of pins (108) in an oven to sinter and fuse ceramic particles of the ceramic mold (100).

9. The method as in any preceding claim, wherein the plurality of pins (108) are formed from a ceramic material, wherein after firing the ceramic mold, the method comprises:
removing the plurality of pins (108) from the ceramic mold (100).

10. The method as in claim 9, wherein after removing the plurality of pins (108), the method comprises:
inserting plugs (158) into each shell aperture of the plurality of shell apertures (106); optionally wherein after inserting plugs (158) into each shell aperture (106) of the plurality of shell apertures (106), the method comprises:
pouring a liquid metal into the ceramic mold (100); and
solidifying the liquid metal to form the cast component.

11. The method as in any one of claims 1 to 8, wherein the plurality of pins (108) is formed from a metal material, wherein after firing the ceramic mold (100), the method comprises:
pouring a liquid metal into the ceramic mold (100) such that the plurality of pins (108) diffuse and alloy into the liquid metal; and
solidifying the liquid metal to form the cast component.

12. The method as in claim 11, further comprising removing the mold (100) from the cast component.

13. The method as in claim 12, wherein removing the ceramic mold (100) from the cast component comprises a combination of mechanical force and chemical leaching.

14. A ceramic mold (100) comprising:
a shell structure (102) defining a plurality of shell apertures (106) each sized, shaped, and oriented to receive a pin (108); and
a core structure (104) disposed within the shell structure (102), wherein a cavity (110) is defined between the core structure (104) and the shell structure (102), the cavity (110) adapted to define a shape of a cast component upon casting and removal of the ceramic mold (100).

15. The ceramic mold (100)as in claim 14, further comprising a plurality of pins (108), wherein each pin (108) of the plurality of pins (108) extends through a first shell aperture (106) of the plurality of shell apertures (106), across a portion of the cavity (110), and into one of a second shell aperture (106) of the plurality of shell aperture (106) or contact with the core structure (104); and/or wherein the cast component is a turbine component.
